Europäisches Patentamt

European Patent Office

Office européen des brevets

(19)

(11) **EP 0 991 161 A1**

(12) ## DEMANDE DE BREVET EUROPEEN

(43) Date de publication:
**05.04.2000 Bulletin 2000/14**

(51) Int Cl.$^7$: **H02J 7/00**

(21) Numéro de dépôt: **99402085.7**

(22) Date de dépôt: **19.08.1999**

| | |
|---|---|
| (84) Etats contractants désignés:<br>**AT BE CH CY DE DK ES FI FR GB GR IE IT LI LU MC NL PT SE**<br>Etats d'extension désignés:<br>**AL LT LV MK RO SI** | (72) Inventeurs:<br>• **Attimont, Luc**<br>  **78560 Le Port Marly (FR)**<br>• **Bodin, Jannick**<br>  **92380 Garches (FR)** |
| (30) Priorité: **28.09.1998 FR 9812071** | (74) Mandataire: **Lamoureux, Bernard**<br>**COMPAGNIE FINANCIERE ALCATEL**<br>**Dépt. Propriété industrielle**<br>**30, avenue Kléber**<br>**75116 Paris (FR)** |
| (71) Demandeur: **ALCATEL**<br>**75008 Paris (FR)** | |

(54) **Dispositif électronique portable avec circuit de contrôle de la décharge d'une batterie, et procédé associé**

(57)    La présente invention concerne un dispositif éledronique portable (1) susceptible d'être alimenté éledriquement par différents types de batteries. Selon l'invention, le dispositif comporte des moyens (10) d'identification du type de batterie (2) qui lui est connedée, et un circuit de contrôle de la décharge de ladite batterie comprenant :

- des moyens (11) de comparaison de la tension de sortie ($U_S$) de la batterie avec une valeur seuil minimale (S);

- des moyens (12) de détermination d'une valeur représentative du courant de sortie ($I_S$) de la batterie;

- des moyens (13) d'adaptation de ladite valeur seuil minimale en fondion de la valeur représentative du courant de sortie ($I_S$) et du type de batterie identifié;

- des moyens (14) pour stopper l'alimentation du dispositif électronique (1) lorsque la tension de sortie ($U_S$) de la batterie (2) devient inférieure à la valeur seuil minimale (S) issue des moyens d'adaptation (13).

   Application à tout type de dispositif électronique portable alimenté par batterie.

FIG_1

**Description**

La présente invention concerne les appareils électroniques portables (téléphones mobiles, PC ou autre) dont l'alimentation électrique s'effectue par l'intermédiaire d'une batterie.

Dans le cas des batteries rechargeables, il est connu que l'on ne doit pas autoriser la décharge de la batterie dès lors que sa tension interne passe en deçà d'une certaine valeur seuil, sous peine d'endommager la batterie et de réduire le nombre de cycles décharge/ recharge initialement possible. Pour ce faire, certains fabricants de batteries ont prévu d'équiper leur batterie d'un circuit de contrôle de la décharge de la batterie effectuant une comparaison de la tension de sortie de la batterie avec une valeur seuil, et déconnectant la batterie de l'appareil dès lors que cette valeur seuil est franchie. La valeur du seuil peut être fixée définitivement. Dans ce cas, la protection de la batterie est bien assurée, mais son utilisation n'est pas optimisée. En effet, si l'on considère à titre d'exemple que le dispositif électronique est un téléphone mobile, le courant de sortie de la batterie alimentant ce téléphone mobile sera plus important lorsque le téléphone est dans un mode de communication que lorsqu'il est dans un mode dit de veille. Dans ce cas, la tension de sortie de la batterie, utilisée dans la comparaison avec la valeur seuil, ne reflète pas du tout la tension interne de la batterie et la batterie sera déconnectée trop tôt du téléphone.

Pour assurer la protection de la batterie lors de sa décharge tout en optimisant son utilisation, il a été déjà été proposé d'ajouter, dans le circuit de contrôle de la décharge, des moyens d'estimation de la baisse de tension due à l'impédance interne de la batterie à partir d'une mesure du courant de sortie de la batterie, et des moyens pour adapter la valeur seuil en deçà de laquelle la batterie doit être déconnectée en fonction de la mesure du courant de sortie de la batterie. Un circuit de contrôle fonctionnant selon ce principe est par exemple décrit dans le document US 5,705,913.

L'inconvénient du circuit de contrôle décrit précédemment réside dans le fait qu'il est implanté à l'intérieur de la batterie, ce qui vient grever le coût de la batterie. Cela se répercute bien évidemment sur l'utilisateur à chaque fois que ce dernier doit acheter une nouvelle batterie. Par ailleurs, l'ajout d'un circuit de contrôle dans la batterie est en contradiction avec la recherche constante de la réduction de l'encombrement d'une batterie. Enfin, si l'utilisateur installe sur son dispositif portable une batterie rechargeable qui ne dispose pas d'un contrôle de décharge, aucune protection de la batterie ne peut être assurée.

Le but de la présente invention est de proposer un dispositif électronique susceptible de fonctionner avec différents types de batteries et gérant de façon autonome le contrôle de la décharge de la batterie.

Ce but est atteint grâce à un dispositif électronique portable susceptible d'être alimenté électriquement par différents types de batteries, caractérisé en ce qu'il comporte des moyens d'identification du type de batterie qui lui est connectée, et un circuit de contrôle de la décharge de ladite batterie comprenant :

- des moyens de comparaison de la tension de sortie de la batterie avec une valeur seuil minimale ;

- des moyens de détermination d'une valeur représentative du courant de sortie de la batterie;

- des moyens d'adaptation de ladite valeur seuil minimale en fonction de la valeur représentative du courant de sortie et du type de batterie identifié;

- des moyens pour stopper l'alimentation du dispositif électronique lorsque la tension de sortie de la batterie devient inférieure à la valeur seuil minimale issue des moyens d'adaptation.

La présente invention a également pour objet un procédé de contrôle de la décharge d'une batterie alimentant un dispositif électronique portable du type consistant à stopper l'alimentation du dispositif électronique portable par la batterie dès lors que la tension de sortie de la batterie devient inférieure à une valeur seuil minimum prédéterminée, caractérisé en ce qu'il consiste à effectuer, au niveau dudit dispositif électronique portable, les étapes suivantes:

- Identifier le type de ladite batterie;

- déterminer une valeur représentative du courant de sortie de la batterie;

- adapter, en fonction du type de la batterie et de la valeur représentative du courant de sortie de la batterie, ladite valeur seuil minimale ;

- Comparer la tension de sortie de la batterie avec ladite valeur seuil minimale;

- effectuer les étapes précédentes tant que la tension de sortie est supérieure à ladite valeur seuil minimale ;

- Stopper l'alimentation du dispositif électronique portable par la batterie lorsque la tension de sortie de la batterie devient inférieure à ladite valeur seuil minimale .

On précise qu'il est déjà connu de prévoir, dans un dispositif électronique portable du type téléphone mobile, des moyens d'identification du type de batterie qui lui est connectée. Cependant, cette identification du type de batterie n'a jusqu'à présent été utilisée que dans le but de savoir si la batterie utilisée est rechargeable ou non, ou de choisir, dans le cas d'une batterie rechargeable, l'algorithme de charge le plus approprié. En effet, dans le cas de l'utilisation d'une batterie non rechargeable, il est impératif, pour des raisons de sécurité, d'empêcher toute possibilité de recharge de la batterie. Par ailleurs, il existe plusieurs types de batteries rechargeables qui diffèrent par leur taille et/ou par leur technologie. Chaque type de batterie rechargeable requiert un algorithme de charge qui lui est propre. A titre d'exemple, la recharge d'une batterie au Lithium selon un algorithme de recharge normalement utilisé pour une batterie au Nickel risque de mener à l'explosion de la batterie. Il résulte de ce qui précède qu'il est nécessaire d'adapter l'algorithme de recharge d'une batterie au type de batterie effectivement utilisée.

De manière différente, la présente invention propose de se servir de l'identification du type de batterie effectivement utilisée pour pouvoir contrôler sa décharge au niveau du dispositif électronique.

L'invention, ainsi que les avantages qu'elle procure, seront mieux compris au vu de la description qui suit faite en référence aux figures annexées dans lesquelles :

- la figure 1 illustre sous forme de synoptique simplifié les différents moyens mis en oeuvre selon l'invention dans un dispositif électronique portable connecté à une batterie;

- la figure 2 représente un premier mode de réalisation possible des moyens d'adaptation 13 de la figure 1;

- la figure 3 représente une variante de réalisation pour les moyens d'adaptation 13 de la figure 1.

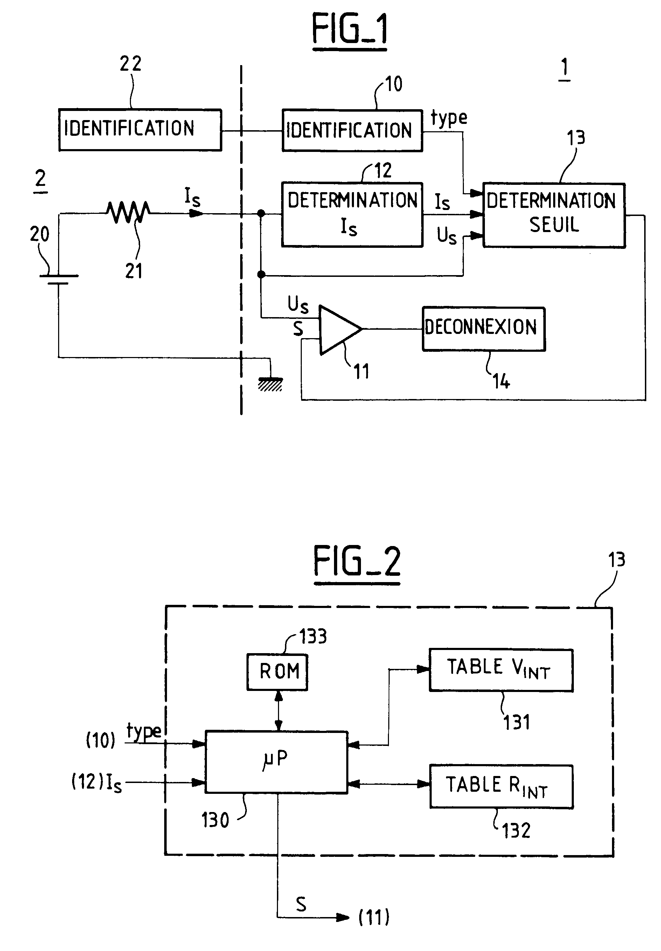

En référence à la figure 1, un dispositif électronique portable 1, par exemple un téléphone mobile, est connecté électriquement à une batterie 2 représentée schématiquement par une source de tension 20 reliée électriquement en série avec une résistance 21 représentant la résistance interne de la batterie. On note par la suite respectivement $U_s$ et $I_s$, la tension et le courant de sortie de la batterie 2. La batterie comporte également, de façon classique, des moyens 22 délivrant au dispositif électronique 1 une information lui permettant de déterminer le type de batterie qui lui est connectée. Pour simplifier la figure, les liaisons entre les moyens d'identification 22 d'une part, et l'ensemble constitué de la source de tension 20 et de la résistance 21 d'autre part, n'ont pas été représentées. On pourra par exemple se reporter au document EP 0 394 074 qui décrit plusieurs modes de réalisation possibles pour l'identification du type de batterie. Le dispositif électronique 1 comporte quant à lui des moyens 10 d'identification du type de batterie qui lui est connecté recevant l'information de la batterie, et délivrant le type de la batterie. Dans un premier mode de réalisation possible, l'identification du type de batterie s'effectue par la mesure de la valeur d'une résistance spécifique (non représentée) contenue dans les moyens d'identification 22 de la batterie et directement liée au type de batterie. Les moyens d'identification 10 comportent dans ce cas des moyens de mesure de cette résistance spécifique, ainsi qu'une table mémorisée dans le dispositif électronique 1 permettant de lire le type associé à la valeur mesurée de la résistance spécifique. En variante, certaines batteries disponibles sur le marché disposent d'une mémoire de type EEPROM (initiales anglo-saxonnes mises pour Electrically Erasable Programmable Random Access Memory) constituant les moyens d'identification 22, reliée par un bus série à un organe de contrôle du type microprocesseur dans le dispositif électronique, et délivrant directement une information relative au type de la batterie.

Selon une première caractéristique de l'invention, le type de la batterie issu des moyens d'identification 10 va être utilisé dans le processus de contrôle de la décharge de la batterie 1, comme cela sera expliqué plus loin.

Le dispositif électronique 1 dispose en outre d'un circuit de contrôle de la décharge de ladite batterie comprenant :

- des moyens 11 de comparaison de la tension de sortie $U_s$ de la batterie avec une valeur seuil minimale S;

- des moyens 12 de détermination d'une valeur représentative du courant de sortie $I_s$ de la batterie;

- des moyens 13 d'adaptation de ladite valeur seuil minimale S en fonction de la valeur représentative du courant de sortie $I_s$ et du type de batterie identifié;

- des moyens 14 pour stopper l'alimentation du dispositif électronique 1 lorsque la tension de sortie $U_s$ de la batterie devient inférieure à la valeur seuil minimale S issue des moyens d'adaptation.

On décrit ci-après différentes mises en oeuvre possibles pour les différents moyens précités :

La détermination d'une valeur représentative du courant de sortie $I_s$ de la batterie peut s'effectuer soit par mesure de ce courant, soit par estimation logicielle de ce courant. Dans le premier cas, les moyens 12 se composent d'une résistance de shunt connectée en série à la sortie de la batterie, les connexions en entrée et en sortie de cette résistance de shunt étant reliées aux deux bornes d'entrées d'un amplificateur différentiel. La sortie de l'amplificateur différentiel délivre alors une mesure analogique du courant $I_s$. Dans le cas d'une estimation logicielle du courant $I_s$, les moyens de 12 comportent une table mémorisant la consommation de chaque élément constituant le dispositif électronique 1 par mode d'utilisation (par exemple en mode veille et en mode communication pour un téléphone mobile). En fonction du mode d'utilisation courant, l'organe de contrôle du type microprocesseur du dispositif 1 lance un programme qui estime la puissance consommée $P_c$ dans ce mode courant en additionnant la consommation de tous les éléments activés dans ce mode. L'estimation $\hat{I}_s$ du courant de sortie est alors donnée par la relation suivante :

$$\hat{I}_s = P_c/U_s$$

La relation précédente, qui tient compte de la tension de sortie $U_s$ de la batterie, n'est vraie que dans le cas où l'on utilise une alimentation à découpage. Dans le cas d'une alimentation linéaire, il suffit d'estimer le courant de sortie $I_s$ en fonction de la puissance consommée $P_c$ dans le mode d'utilisation courant du dispositif électronique.

L'adaptation de la valeur de seuil S doit s'effectuer de telle manière que cette valeur de seuil vérifie la relation suivante :

$$S = V_{INT} - ( R_{iNT} \times I_s)$$

dans laquelle :

- $V_{INT}$ représente la tension interne minimum de la batterie, aux bornes de la source de tension 20, en deçà de laquelle la batterie ne doit plus être déchargée;

- $R_{INT}$ représente la valeur de la résistance interne 21 de la batterie;

- $I_s$ représente soit la mesure, soit l'estimation du courant de sortie, issue des moyens de détermination 12.

Dans un premier mode de réalisation possible, les moyens d'adaptation 13 du seuil S comportent, en référence à la figure 2, l'organe de contrôle 130 du type microprocesseur du dispositif électronique 1 qui reçoit respectivement l'information de type de batterie délivré par les moyens d'identification 10, et la mesure ou l'estimée du courant de sortie $I_s$ de la batterie délivrée par les moyens 12. Les moyens d'adaptation 13 comportent également une première table 131 et une seconde table 132 contenant respectivement, pour chaque type de batterie possible, la valeur $V_{INT}$ de la tension interne minimum et la valeur $R_{INT}$ de la résistance interne de la batterie, ces deux valeurs étant fournies par les fabricants de batteries. En fonction du type de batterie délivré par les moyens d'identification 10, le microprocesseur 130 va rechercher dans les deux tables 131 et 132 les valeurs $V_{INT}$ et $R_{INT}$, et lance un programme contenu dans une ROM 133 pour calculer la valeur seuil minimale adaptée selon la relation donnée précédemment.

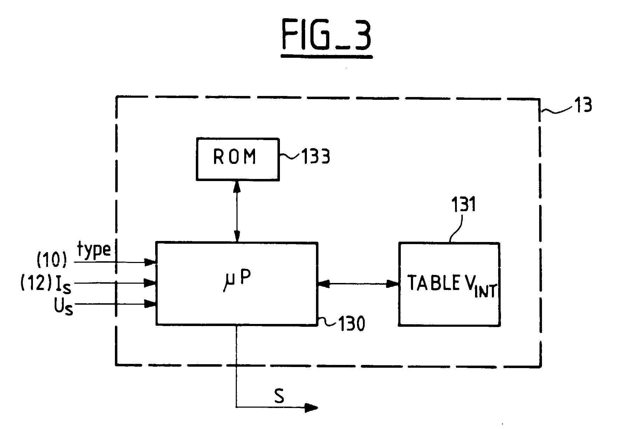

En variante, les moyens d'adaptation 13 reçoivent, en plus de l'information de type de batterie délivré par les moyens d'identification 10, et de la mesure ou de l'estimée du courant de sortie $I_s$ délivrée par les moyens 12, la valeur de la tension de sortie $U_s$ de la batterie. Conformément à la figure 3, les moyens d'adaptation 13 comportent l'organe de contrôle 130 et une unique table 131 contenant, pour chaque type de batterie possible, la valeur $V_{INT}$ de la tension interne minimum fournie par les fabricants. La valeur $R_{INT}$ de la résistance interne est quant à elle estimée grâce à un programme de calcul de la ROM 133 qui détermine, pour chaque variation $\Delta I_s$ du courant de sortie $I_s$, la variation correspondante $U_s$ de la tension de sortie $\Delta U_{S,}$ et détermine la valeur de la résistance interne à partir de la variation relative de la tension de sortie et du courant de sortie selon la relation :

$$R_{INT} = \Delta U_s/\Delta I_s$$

Le calcul de la valeur seuil adaptée s'effectue alors comme dans le cas de la figure 2.

Les moyens de comparaison référencés 11 sur la figure 1 peuvent être de différentes natures :

Dans un premier mode de réalisation possible, il peut s'agir d'un comparateur analogique recevant, sur l'une de ses entrées, la valeur analogique de la tension de sortie $U_s$ de la batterie, et sur la seconde entrée, la valeur seuil minimale adaptée S issue des moyens 13, convertie au préalable en une valeur analogique.

Dans une première variante, on remplace le comparateur analogique par un comparateur programmable recevant en entrée la valeur analogique de la tension de sortie $U_s$ de la batterie, et présentant un seuil de comparaison programmable en fonction de la valeur seuil minimale S.

Dans une seconde variante, la comparaison s'effectue de manière logicielle en comparant les valeurs numériques de la tension de sortie $U_s$ de la batterie et de la valeur seuil minimale.

Dans les trois modes de réalisation, les moyens de comparaison 11 délivrent un signal de coupure à un module 14 dès lors que la tension de sortie $U_s$ devient inférieure à la valeur seuil minimale S. Ce module 14 stoppe alors l'alimentation du dispositif 1 par la batterie 2. Par stopper l'alimentation, on entend également le fait de réduire à une valeur négligeable la consommation du dispositif électronique 1, notamment en arrêtant toutes les horloges des composants de ce dispositif.

On comprend aisément que d'autres modes de réalisation peuvent être mis en oeuvre sans départir du cadre de la présente invention.

En outre, bien que les différents éléments 10 à 14 ont été décrits séparément, certains composants de ces éléments peuvent être avantageusement mis en commun. Notamment, un seul microprocesseur constituant l'organe de contrôle général du dispositif électronique 1 est nécessaire pour gérer les fonctionnalités d'identification du type de batterie, d'estimation du courant $I_s$, d'adaptation de la valeur seuil S et de la comparaison logicielle de la valeur S avec la tension de sortie $U_s$ de la batterie.

Par ailleurs, le mécanisme de contrôle de la décharge de la batterie ne doit être mis en oeuvre que dans la mesure où les moyens d'identification 10 du type de batterie utilisée ont identifié une batterie rechargeable. Dans le cas de l'utilisation d'une batterie non rechargeable, il est nécessaire d'utiliser la batterie le plus longtemps possible. Le processus de contrôle de décharge tel que décrit précédemment doit donc être inhibé, ou la valeur seuil minimale S doit être réglée à une valeur de tension minimale acceptable par le dispositif électronique puisqu'il n'y a plus nécessité de protéger la batterie contre une décharge trop importante.

**Revendications**

1.  Dispositif électronique portable (1) susceptible d'être alimenté électriquement par différents types de batteries, caractérisé en ce qu'il comporte des moyens (10) d'identification du type de batterie (2) qui lui est connectée, et un circuit de contrôle de la décharge de ladite batterie comprenant :

    -   des moyens (11) de comparaison de la tension de sortie ($U_s$) de la batterie avec une valeur seuil minimale (S);

    -   des moyens (12) de détermination d'une valeur représentative du courant de sortie ($I_s$) de la batterie;

    -   des moyens (13) d'adaptation de ladite valeur seuil minimale (S) en fonction de la valeur représentative du courant de sortie ($I_s$) et du type de batterie identifié;

    -   des moyens (14) pour stopper l'alimentation du dispositif électronique (1) lorsque la tension de sortie ($U_s$) de la batterie (2) devient inférieure à la valeur seuil minimale (S) issue des moyens d'adaptation (13).

2.  Dispositif électronique portable selon la revendication 1, caractérisé en ce que, chaque type de batterie présentant une tension interne minimum ($V_{INT}$) et une résistance interne ($R_{INT}$) prédéfinies, les moyens d'adaptation (13) comportent des premiers moyens (130-132; 130,131,133) pour déterminer, en fonction du type de batterie identifiée, la tension interne minimum ($V_{INT}$) et la résistance interne ($R_{INT}$), de cette batterie, et des seconds moyens (130, 133) pour déterminer, en fonction du courant

de sortie ($I_s$), de la tension interne minimum ($V_{INT}$) et de la résistance interne ($R_{INT}$), la valeur seuil minimale adaptée (S).

3.  Dispositif électronique portable selon la revendication 2, caractérisé en ce que lesdits premiers moyens comportent une première table (131) dans laquelle est mémorisée, pour chaque type de batterie possible, la tension interne minimum ($V_{INT}$) de la batterie, et une seconde table (132) dans laquelle est mémorisée, pour chaque type de batterie possible, la résistance interne ($R_{INT}$) de la batterie.

4.  Dispositif électronique portable selon la revendication 2, caractérisé en ce que lesdits premiers moyens comportent une première table (131) dans laquelle est mémorisée, pour chaque type de batterie possible, la tension interne minimum ($V_{INT}$) de la batterie, et des moyens (130, 133) estimant la résistance interne ($R_{INT}$) de la batterie à partir d'une mesure de la variation relative entre la tension de sortie ($U_s$) de la batterie et du courant de sortie ($I_s$).

5.  Procédé de contrôle de la décharge d'une batterie (2) alimentant un dispositif électronique portable (1) du type consistant à stopper l'alimentation du dispositif électronique portable par la batterie dès lors que la tension de sortie ($U_s$) de la batterie devient inférieure à une valeur seuil minimum (S) prédéterminée, caractérisé en ce qu'il consiste à effectuer, au niveau dudit dispositif électronique portable, les étapes suivantes:

    -   Identifier le type de ladite batterie;

    -   déterminer une valeur représentative du courant de sortie ($I_s$) de la batterie;

    -   adapter, en fonction du type de la batterie et de la valeur représentative du courant de sortie ($I_s$) de la batterie, ladite valeur seuil minimale (S);

    -   Comparer la tension de sortie ($U_s$) de la batterie avec ladite valeur seuil minimale;

    -   effectuer les étapes précédentes tant que la tension de sortie est supérieure à ladite valeur seuil minimale (S);

    -   Stopper l'alimentation du dispositif électronique portable par la batterie lorsque la tension de sortie ($U_s$) de la batterie devient inférieure à ladite valeur seuil minimale (S).

6.  Procédé de contrôle selon la revendication 5, caractérisé en ce que l'étape de détermination d'une valeur représentative du courant de sortie ($I_s$) s'effectue par une mesure du courant de sortie.

7. Procédé de contrôle selon la revendication 5, caractérisé en ce que l'étape de détermination d'une valeur représentative du courant de sortie ($I_s$) s'effectue par un calcul du courant de sortie déduit à partir de la puissance consommée ($P_c$) par le mode d'utilisation courant du dispositif électronique portable.

8. Procédé de contrôle selon la revendication 7, caractérisé en ce que la valeur représentative du courant de sortie est fonction en outre de la tension de sortie ($U_s$) de la batterie.

9. Procédé de contrôle selon l'une quelconque des revendications 5 à 7, caractérisé en ce que valeur seuil minimale est adaptée en outre en fonction de la tension de sortie ($U_s$) de la batterie.

## FIG_1

22

IDENTIFICATION

2

20 ‖— ⌇ 21

$I_S$

10

IDENTIFICATION $\quad$ type

$\underline{1}$

13

12

DETERMINATION $I_S$ $\quad$ $I_S$

DETERMINATION SEUIL

$I_S$

$U_S$

$U_S$

S

DECONNEXION

11

14

## FIG_2

13

133

ROM

(10) type

(12) $I_S$

µP

130

TABLE $V_{INT}$

131

TABLE $R_{INT}$

132

S $\longrightarrow$ (11)

# FIG_3

**Office européen des brevets**

## RAPPORT DE RECHERCHE EUROPEENNE

Numéro de la demande

EP 99 40 2085

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 5 668 465 A (MAY VINCENT D) 16 septembre 1997 (1997-09-16) * le document en entier * --- | 1-9 | H02J7/00 |
| A | WO 98 36483 A (NOKIA TELECOMMUNICATIONS OY ;BAARMAN GOESTA (FI); BJOERKAS MIKAEL) 20 août 1998 (1998-08-20) * le document en entier * --- | 1-9 | |
| D,A | EP 0 394 074 A (MOTOROLA INC) 24 octobre 1990 (1990-10-24) * le document en entier * ----- | 1-9 | |

**DOMAINES TECHNIQUES RECHERCHES (Int.Cl.7)**

H02J

Le présent rapport a été établi pour toutes les revendications

| Lieu de la recherche | Date d'achèvement de la recherche | Examinateur |
|---|---|---|
| LA HAYE | 7 janvier 2000 | Moyle, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 99 40 2085

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-01-2000

| Document brevet cité au rapport de recherche | | Date de publication | Membre(s) de la famille de brevet(s) | | Date de publication |
|---|---|---|---|---|---|
| US 5668465 | A | 16-09-1997 | AUCUN | | |
| WO 9836483 | A | 20-08-1998 | FI | 970337 A | 28-07-1998 |
| | | | AU | 5864898 A | 08-09-1998 |
| | | | EP | 0960458 A | 01-12-1999 |
| EP 0394074 | A | 24-10-1990 | US | 5164652 A | 17-11-1992 |
| | | | AT | 155939 T | 15-08-1997 |
| | | | AU | 625121 B | 02-07-1992 |
| | | | AU | 5349190 A | 16-11-1990 |
| | | | CA | 2010232 A,C | 21-10-1990 |
| | | | DE | 9007813 U | 19-12-1996 |
| | | | DE | 69031090 D | 04-09-1997 |
| | | | DE | 69031090 T | 29-01-1998 |
| | | | DK | 299790 A | 18-12-1990 |
| | | | DK | 394074 T | 13-10-1997 |
| | | | EP | 0766363 A | 02-04-1997 |
| | | | ES | 2103726 T | 01-10-1997 |
| | | | IE | 61854 B | 30-11-1994 |
| | | | JP | 2299428 A | 11-12-1990 |
| | | | NO | 178280 B | 13-11-1995 |
| | | | NO | 953046 A | 20-12-1990 |
| | | | WO | 9013166 A | 01-11-1990 |
| | | | US | 5237257 A | 17-08-1993 |

EPO FORM P0460

Pour tout renseignement concernant cette annexe : voir Journal Officiel de l'Office européen des brevets, No.12/82